(19) Europäisches Patentamt
European Patent Office
Office européen des brevets

(11) **EP 2 067 370 B1**

(12) **EUROPEAN PATENT SPECIFICATION**

(45) Date of publication and mention
of the grant of the patent:
**25.08.2010 Bulletin 2010/34**

(21) Application number: **07788538.2**

(22) Date of filing: **27.08.2007**

(51) Int Cl.:
**H04W 4/00** (2009.01)

(86) International application number:
**PCT/EP2007/058856**

(87) International publication number:
**WO 2008/037552 (03.04.2008 Gazette 2008/14)**

(54) **INTER-NETWORK HANDOVER OPTIMIZATION FOR TERMINALS USING ADVANCED RECEIVERS**

OPTIMIERUNG DES HANDOVERS ZWISCHEN NETZEN FÜR ERWEITERTE EMPFÄNGER BENUTZENDE ENDGERÄTE

OPTIMISATION DE TRANSFERTS INTER-RÉSEAUX POUR TERMINAUX UTILISANT DES RÉCEPTEURS ÉVOLUÉS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006 US 537104**

(43) Date of publication of application:
**10.06.2009 Bulletin 2009/24**

(73) Proprietor: **Telefonaktiebolaget LM Ericsson (publ)**
**164 83 Stockholm (SE)**

(72) Inventors:
• **REIAL, Andres**
**211 17 Malmö (SE)**
• **LINDOFF, Bengt**
**237 36 Bjärred (SE)**

(74) Representative: **Bratt, Hanna Catharina et al**
**Ericsson AB**
**Patent Unit Mobile Platforms**
**Nya Vattentornet**
**221 83 Lund (SE)**

(56) References cited:
**US-A- 5 422 933      US-A- 5 557 657**
**US-B1- 6 763 234**

**Description**

BACKGROUND

The present invention relates to cellular telecommunication networks. More particularly, and not by way of limitation, the present invention is directed to a system and method for inter-network handover (HO) optimization for terminals or user equipment (UE) using advanced receivers.

As used herein, the following abbreviations shall have the following meanings:

BLER        block error rate

BS          base station

CE          chip equalizer

CM          compressed mode

CPICH       common pilot channel

DCCH        dedicated control channel

GRAKE       generalized RAKE

GSM         Global System for Mobile communications

HSDPA       high-speed downlink packet access

HO          hand-over

IRAT        inter-RAT

L3          Layer 3 RRC

LMMSE       linear minimum mean square

PDP         power delay profile

RAB         radio access bearer

RAT         radio access technolog

RF          radio frequency

RRC         radio resource control

RRM         radio resource management

RSCP        received signal code power

RSSI        received signal strength indicator

SHO         soft HO

SIR         signal-to-interference ratio

SNR         signal-to-noise ratio

UE          user equipment

WCDMA    wideband code division multiple access

A typical cellular mobile communication network (network) consists of many cells, each of which allows a terminal or UE to maintain a connection with the network over a limited geographical area. As the UE moves around in the region covered by the network, at each time moment, it is connected via a radio link to the cell that can provide the connection with "least cost", where the cost is often related to the signal power needed to transmit over the radio link. Often, but not necessarily, the serving cell is the cell physically closest to the UE. Over time, the network will perform a HO procedure to transfer the UE's connection from one cell to another. In some systems, the UE can maintain a connection simultaneously over several cells, using several radio links in parallel. This is referred to as SHO.

In many cases, several different networks, possibly managed by different operators, are active in a given geographical region. Some networks may not provide a substantially complete (e.g., 100%) coverage over the whole region and a UE connected to a specific network may lose its connection in some locations. To avoid an adverse user experience (e.g., a dropped call or data connection), the original network may arrange for an alternative way to continue the connection by seamlessly switching over to another network that can provide coverage at the location. This may be accomplished using (1) another network belonging to the same operator, or (2) a network belonging to another operator, in which case the UE "roams" over to the other operator.

An example of case (1) is an operator that operates both WCDMA and GSM networks, and switches a WCDMA user over to GSM when the WCDMA coverage becomes weak. This is referred to as an IRAT HO, since the access technology is changed in the HO process. An impending loss of connection in one RAT is not the only reason why an operator may choose to force an IRAT HO. It may also be done if re-distribution of users between the different RATs improves the total capacity of the networks.

An example of case (2) is the operator that only owns a WCDMA network, and, in the case of deficient coverage, directs the UEs to roam to another operator's network with whom they have an agreement. This is a cost-efficient way for a new operator to launch their network without requiring 100% coverage from the first day of operation. However, the original operator loses the revenue from the calls after they have roamed to another network.

A HO to another network is triggered if the useful signal strength, measured by the UE, drops below a certain threshold. This threshold may be continuously signaled by the network to the UE. The network dynamically adjusts the threshold value based on the expected BLER or throughput performance as a function of SIR at the UE, using the knowledge of the current network loading and assuming a standard receiver in the UE. In WCDMA, the standard receiver is a single-antenna RAKE receiver.

The WCDMA RRM procedures are generally known by practitioners in the art, as is the IRAT HO sequence.

The UE receiver performance in terms of the experienced BLER, throughput, or the average transmit power expended by the network may be significantly improved by applying more advanced receiver structures. For example, a WCDMA UE, using dual receiver antenna chains and/or applying interference suppression has been shown to provide considerable improvements in the experienced BLER, throughput, or the average transmit power expended by the network. This means that the performance is improved while the UE is in the standard coverage area of the WCDMA network. But in addition to that, advanced UE receivers would allow the coverage area itself to be extended, because the performance limiting (or in more extreme cases, connection-terminating) signal level thresholds are lower and they would be encountered further away from the center of the cell.

A primary disadvantage of the existing HO management solutions is that the decision to perform the HO to another network is based on comparing the measured signal strength with a fixed threshold that does not account for the actual improved UE performance. As a result, the UEs with advanced receivers are reverted away from the network unnecessarily, which wastes network resources, limits the revenue of the operator, and possibly degrades the user experience. In addition, each HO procedure implies an additional cost to the operator in terms of signaling resources used and potential UE performance degradation due to performing measurements in parallel (e.g. the compressed mode in WCDMA).

The foregoing disadvantage has been encountered by operators. If, instead of instructing any user below a fixed threshold to roam away of their network, the connections for the UEs with advanced receivers could be maintained all the way to their actual performance limits, the number of roaming occurrences would be reduced significantly. This would mean an expansion of the effective coverage area for users with advanced terminals and improved income for the operator, especially since the users, once roamed away, usually do not automatically return to the original network.

Thus there is desired a HO decision system that, instead of using a fixed HO threshold, accounts for the actual UE receiver performance. In a related application of Applicant (US Serial No. 11/289,001, filed November 29, 2005, entitled "Cell Selection in HSDPA Communication Systems), the concept of adjusting HO measurements, like Ec/Io in WCDMA for improving HSDPA cell selection is described. As is known in the art, power sharing is the basis for multi-user access in CDMA systems. In such systems, coverage tests measure the signal (RSCP) to interference (RSSI) ratio, Ec/Io, expressed in dB. Ec/Io is the ratio of the signal energy within one chip duration of the pilot signal to the power spectrum of the interference plus noise. That disclosure describes adjusting Ec/Io to better reflect the HSDPA performance, by taking the PDP as well as an estimate of the cell load into account. However, the concept is basically only suitable for HSDPA inter-frequency handover, and therefore is not adapted to facilitate IRAT/inter-network HO using advanced receivers as disclosed herein.

Another example can be found in document US 5557657 (BARNETT CHARLES) 17 September 1996.

It would be advantageous to have a system and method adapted to facilitate IRAT/inter-network HO using advanced receivers that overcomes the disadvantages of the prior art. The present invention provides such a system and method.

BRIEF SUMMARY OF THE INVENTION

The present invention is a system and method adapted to adjust threshold values for initiating HO measurements based on actual UE performance. The threshold values for initiating the HO measurements and for executing the HO are determined by the network. Prior to determining whether to proceed with these procedures, the thresholds are adjusted, based on the actual UE performance. This adjustment is achieved by applying an offset in dB that captures the effective SIR improvement of the advanced receiver compared to the standard receiver used to set the thresholds. The offset depends on, among other things, the receiver type used, the number of receiver antennas, the multi-path channel profile, the number of active radio links, and the services/connection modes that are currently active in the UE.

BRIEF DESCRIPTION OF THE SEVERAL VIEWS OF THE DRAWING

In the following section, the invention will be described with reference to exemplary embodiments illustrated in the figures, in which:

FIG. 1 is an graph comparing the HO process with example threshold values using the CPICH RSCP as a HO criterion;

FIG. 2 is a block diagram for a UE according to a first embodiment of the present invention;

FIG. 3 is a flow chart of the method of the first embodiment of the present invention;

FIG. 4 illustrates the sequence of operations in the second embodiment of the present invention;

DETAILED DESCRIPTION OF THE INVENTION

In order to more fully understand the operation of the present invention, the operation of an advanced receiver in WCDMA is described. From the beginning of the initial standardization of the WCDMA technology in 3GPP, the standard receiver structure has been a single-antenna RAKE receiver that is able to efficiently collect and utilize signal energy available from a fading multi-path propagation channel. This is achieved by assigning each multi-path component a despreader whose reference copy of the spreading code is delayed equally to the path delay of the corresponding multipath component. The outputs of the despreaders (fingers) are then coherently combined to produce a symbol estimate. The RAKE receiver requires knowledge of the multipath delays and the values of the channel impulse response for all paths. A good measure of performance of the RAKE receiver is the SNR after combining, which is maximized if the signal energy from all paths is utilized. An implicit assumption in RAKE combining is that the impairment (noise and interference) components of the signals seen by each finger are uncorrelated, in which case the RAKE receiver is an optimal linear receiver.

However, the single-antenna RAKE receiver performance is limited by a number of factors. One performance-limiting aspect is the fading characteristics of the channel, especially on channels with few multipath components. Secondly, there may be considerable correlation between the impairment signals, either due to the effect of the transmitter and receiver pulse shaping or due to the combined effect of many multipath components in the propagation channel.

In order to improve RAKE receiver performance, a variety of advanced receiver types have been developed. One such advanced receiver type is a dual-antenna receiver, where the signal is received via two separate antennas, RF and front end processing branches. If the two branches are sufficiently separated (electrically and spatially), the dual-antenna RAKE receiver (RAKE2) will then exhibit improved performance, due to the array gain (more signal energy is received) and the diversity gain (the probability of deep fades is reduced). As a result, the BLER performance of the receiver is improved.

Another advanced receiver type incorporates equalization (e.g., LMMSE CE, GRAKE). Such a receiver takes into account the impairment correlation and, to a considerable degree, undoes the loss of orthogonality caused by the channel. This effectively whitens the unwanted signal component, reducing its power, and improves the SNR after combining.

The RAKE2 and GRAKE receivers may also be combined, and the resulting structure (GRAKE2) yields a receiver that combines the diversity and interference suppression in an optimal way, further improving performance. In typical scenarios, GRAKE2 is the optimal linear receiver for WCDMA. The receiver performance may be improved further by applying non-linear operations, e.g. interference cancellation by subtracting the known interfering signal components before detecting the data symbols of interest.

Regardless of the advanced receiver type, its performance advantage compared to the RAKE receiver may be characterized by the resulting average combined SIR improvement (ASIR). This improvement is different for different receiver configurations and scenarios, depending on, for example, the receiver type, the number of antennas used, multipath channel profile, whether the UE is in SHO, the RAB/service currently invoked. However, by classifying the scenarios into a manageable set of categories $C = \{c_1,...,c_N\}$, the SIR gain for each category $\Delta SIR(c_i)$ may be determined and tabulated in advance, e.g. by measurements or simulations.

To describe the environment in which the foregoing advanced receiver types operate, the HO process from WCDMA to GSM is considered. The WCDMA CPICH RSCP and SNR for each cell in the active set is constantly monitored by the UE. The measurement is updated every 70 ms and may be reported to the network. The network maintains thresholds for when the different HO-related activities should be initiated. The reported values are then compared to the relevant thresholds and, if the measurements indicate that the received signal levels at the UE are becoming too weak, a decision is taken to initiate IRAT measurements. The decision may be taken by the UE or the network, in which case this may be communicated to the UE via a RRC-level "Measurement Control" message. In this example, "event 2d" is triggered and the UE would commence to measure the GSM RSSI (RXLEV) for the closest GSM cell.

In order to perform measurements on another frequency, the UE enters CM, whereby all the information from the BS is transmitted during a shorter time interval and some percentage (e.g. 50%) of the time may be used by the UE to re-tune to another frequency and carry out the measurements. These results are then also reported to the network in a "Measurement report" message. Typically, once the UE has been instructed to perform the inter-frequency measurements, it will remain in CM until (a) the signal quality improves sufficiently so that no loss of connection is imminent ("event 2f"), or (b) the alternative network is deemed to have better signal quality than the present one ("event 3a") and a HO is performed.

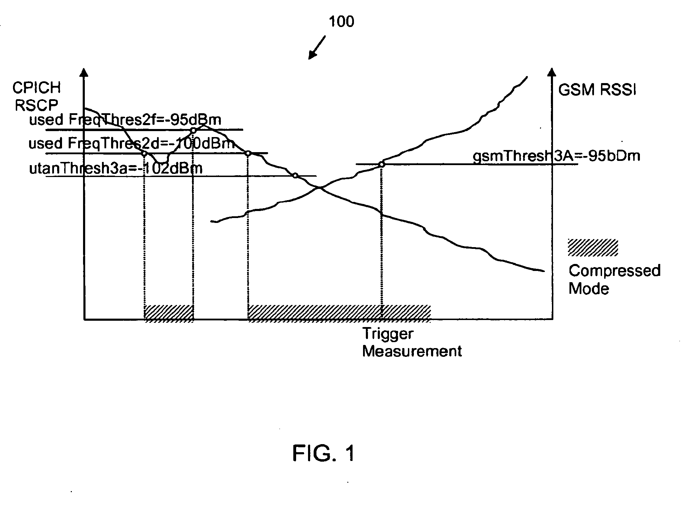

The HO process with example threshold values is depicted in graph 100 of Figure 1, using the CPICH RSCP as a HO criterion. As seen therein, in a first embodiment of the present invention, the network broadcasts and the UE has knowledge of the thresholds used for defining the HO-related events. The latest UE measurement at time t is denoted as $\gamma(t)$ and the threshold for event e is denoted as $\tau(e)$(All SIR values are given in dB.) Then, the UE checks whether the condition(s) for any of the events of interest, $e \in E$, are fulfilled:

$$F\big(e, \tau(e), \gamma(t)\big) = 1$$

where F() is a set of criteria for triggering the events according to the specifications. An example of one such instruction could be the event 2d:

$$F\big("2d", \tau("2d"), \gamma(t)\big) = \begin{cases} 1, & if\ \gamma(t) < \tau("2d") \\ 0, & if\ \gamma(t) > \tau("2d") \end{cases}$$

If event e is established, the UE sends a message signaling that event to the network. The network may then respond with further instructions to the UE in order to, for example, initiate additional measurements, perform a HO, and the like.

As mentioned before, the threshold values $\tau(e)$ are typically based on the RAKE receiver performance. In the first embodiment of the present invention, the UE will account for the improved receiver performance by introducing a correction term in the decision process identifying whether any events in E are triggered:

$$F\big(e, \tau(e) - D, \gamma(t)\big) = 1$$

In one embodiment, D may be determined by defining the current receiver and channel category *c(t)* and performing a table lookup to find the corresponding average SIR gain,

$$D = \Delta SIR\big(c(t)\big).$$

In another embodiment, two instantaneous SIR values may be computed: the current effective receiver SIR, $SIR(t)$ (which is usually done as part of normal receiver operation) and an additional RAKE receiver SIR $SIR_{RAKE}(t)$, being a low complexity operation, once the channel estimates and combining weights are available. The correction term is then determined as

$$D = SIR(t) - SIR_{RAKE}(t)$$

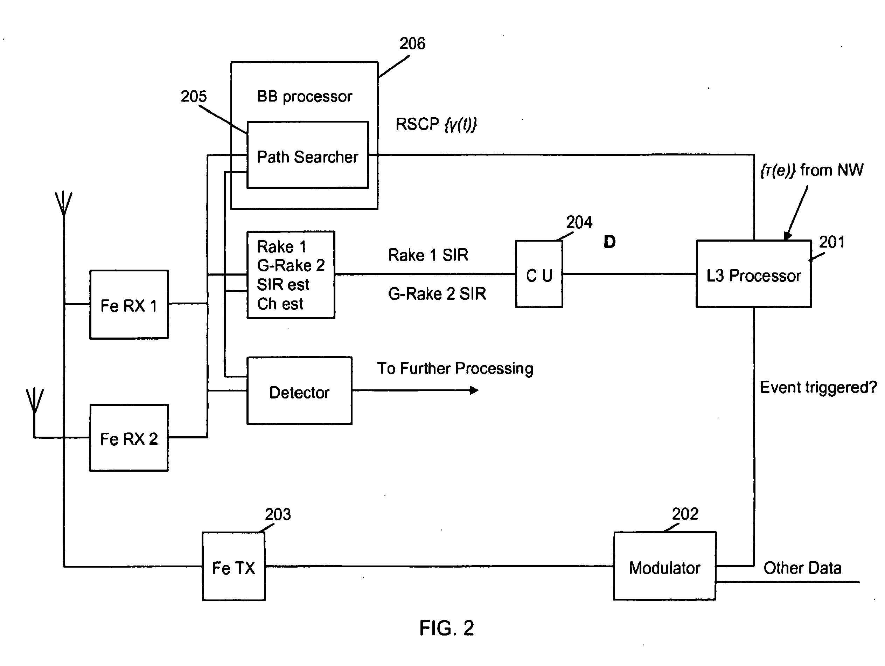

A block diagram of a UE according to a first embodiment of the present invention is illustrated in Figure 2. As seen therein, the latest UE measurement $\gamma(t)$ is received at block L3 decision processor 201, which also receives $\tau(e)$ from the network. The UE measurement $\gamma(t)$ is supplied from a base band processor 206, or more precisely from a path searcher 205 which is part thereof. In other implementations, $\gamma(t)$ could be supplied from some other baseband processing stage. L3 decision processor 201 checks whether the condition(s) for any of the events of interest, $e \in E$, are fulfilled as noted above. If event e is established, the UE sends a message via modulator 202 and front end transmitter 203 signaling that event to the network. The network may then respond with further instructions to the UE in order to, for example, initiate additional measurements, perform a HO, and the like.

The control unit 204 will account for the improved receiver performance by introducing a correction term in the decision process of L3 decision processor 201 identifying whether any events in E are triggered. In one embodiment, D, as communicated to L3 decision processor may be determined by defining the current receiver and channel category $c(t)$ and performing a table lookup to find the corresponding average SIR gain, as noted above in equation 3.

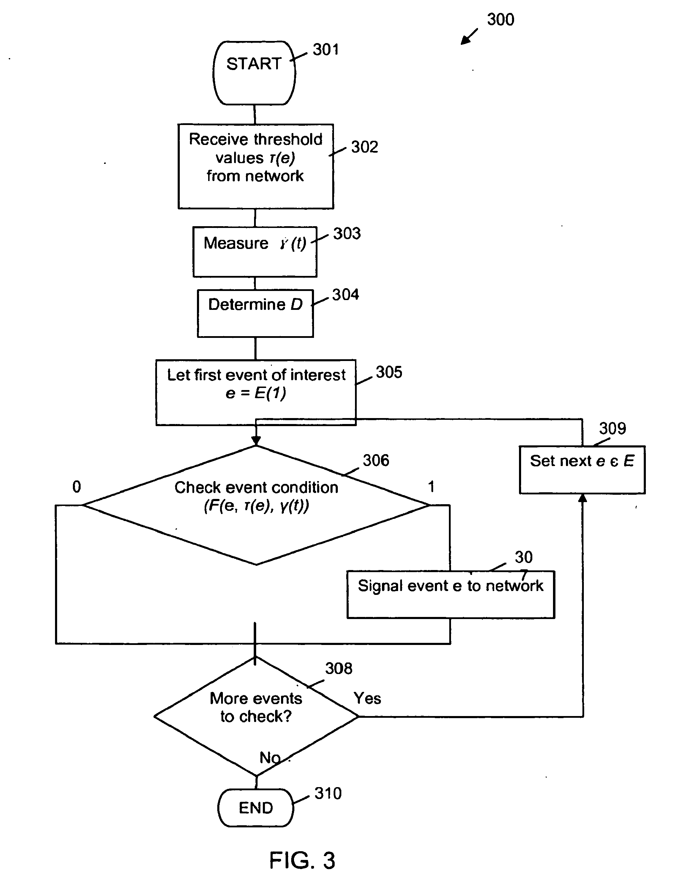

The UE of Figure 2, in particular the L3 decision processor, operates according to the sequence of operations seen in the flow chart 300 of Figure 3. The flow chart of Figure 3 checks for all events of interest in E. The process starts in step 301. In step 302, the UE receives thresholds used for defining the HO-related events from the network. The threshold for event e is denoted as $\tau(e)$. In step 303, the measurement at time t, denoted as $\gamma(t)$, is taken. At step 304, D is determined as described above. Then, in step 305, the first event of interest is set. In step 306, the UE checks whether the condition(s) for any of the events of interest, $e \in E$, are fulfilled according to

$$F\big(e, \tau(e), \gamma(t)\big) = 1.$$

In step 307, if event e is established, the UE sends a message signaling that event to the network. The network may then respond in step 308 with further instructions to the UE in order to, for example, initiate additional measurements, perform a HO, and the like. If further events are to be checked, the next event is set at step 309, which is then checked at step 306. The process ends at step 310.

Note that any subsequent HO-related actions are dictated by the BS in separate commands sent to the UE and are not indicated in the flow chart.

In a second embodiment of the present invention, the threshold values $\tau(e)$ are not broadcast and the UE has no knowledge of the current threshold values. In this embodiment, the UE will send the UE measurement results $\gamma(t)$ to the network, which then evaluates the relevant conditions for events in E. In other words, the decision process expressed in equation (1) takes place in the network, instead of the UE.

In the second embodiment of the present invention, the UE accounts for the improved receiver performance by modifying the RSCP value appropriately before reporting it. That is, instead of reporting the actual value of $\gamma(t)$, it reports

$$\gamma_{eff}(t) = \gamma(t) + D$$

The correction term D is determined as in equation (3) or equation (4).

The block diagram for a UE implementing the second embodiment of the present invention is similar to that seen in Figure 2. The main difference is that, instead of performing the L3 decision process in the UE and sending an event flag to the network, the offset D is applied to the measurement γ(*t*) and the adjusted measurement is sent it to the network.

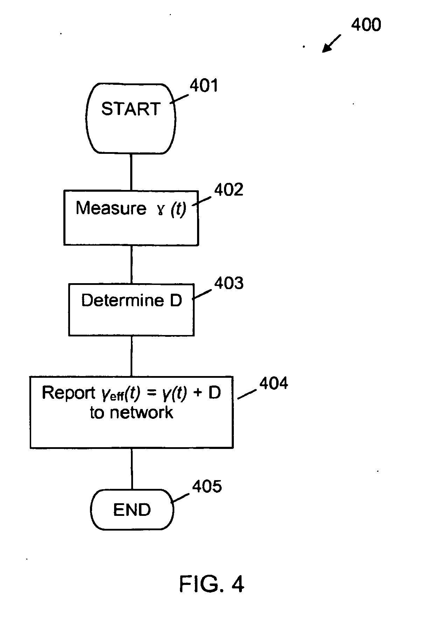

Figure 4 illustrates the sequence of operations in the second embodiment of the present invention. In some cases, several RABs or services are in progress in the UE simultaneously, which may experience different effective SIR improvement impact due to the advanced receiver. In such a situation, the smallest SIR improvement should be selected as the correction term D. This guarantees that needs of the most sensitive service are accounted for, and avoids undue signal level reduction for any of the services. The flow chart 400 starts at step 401. In step 402, the measurement at time t, denoted as γ(*t*), is taken. At step 403, D is determined as described above. Then, at step 404, γ*eff*(τ) = γ(*t*) + *D* is reported to the network. At step 405, the process ends.

As one option, the RSCP may be used as γ(*t*), the HO criterion in the disclosed herein. The procedure may alternatively be carried out by using the CPICH Ec/Io measure as the criterion. The adjustment of the alternative threshold (s) would follow the same principles.

The following advantages are obtained by UEs having advanced receivers in a network applying embodiments of the invention: usable coverage area of each cell in the network is increased for UE-s with advanced receivers; unnecessary instances of HO to other networks are avoided; and UE performance degradation and/or system capacity reduction due to parallel measurements in the UE is minimized.

The network will obtain the following benefits: the loss of revenue for the original operator due to roaming to another operator's network is reduced; the available network capacity (i.e. operator's hardware investment) is more fully utilized; and less network resources are used for HO signaling.

As will be recognized by those skilled in the art, the innovative concepts described in the present application can be modified and varied over a wide range of applications. For example, the present invention has been described in terms of a HO from WCDMA to GSM. However, the invention is not limited to that context. For example, the described threshold adjustment method may be applied also to HOs between other technologies, between two networks using the same technology, and even to inter-frequency handovers within the same network. The present invention can be implemented wherever it is advantageous to avoid unnecessarily initiating a measurement and HO process that may drain network signaling resources and/or capacity. Accordingly, the scope of patented subject matter should not be limited to any of the specific exemplary teachings discussed above, but is instead defined by the following claims.

**Claims**

1. A method for optimizing inter-network handovers, HO, by user equipment, UE, comprising the step of:

    adjusting threshold values τ(*e*) used by a network for initiating HO measurements based on actual UE performance by applying an offset that captures the effective improvement of an advanced receiver compared to a standard receiver used to set the threshold values.

2. The method of claim 1, wherein the adjusting step comprises applying an offset in dB that captures the effective Signal-to-Interference-Ratio, SIR, improvement of an advanced receiver compared to a standard receiver used to set the thresholds.

3. The method of claim 1 or 2, wherein the offset is calculated based on at least one parameter selected from the group consisting of: the type of receiver; the number of receiver antennas; the multi-path channel profile; the number of active radio links; and the services/connection modes currently active in the UE.

4. The method of claim 1, wherein the step of adjusting threshold values uses a common pilot channel, CPICH, received signal code power, RSCP, or Ec/Io values, as a HO criterion.

5. The method of claim 1, further comprising the step of the checking, by the UE, whether the condition(s) for any of the events of interest, *e* ∈ *E*, are fulfilled:

$$F\big(e,\tau(e),\gamma(t)\big)=1$$

where F() is a set of instructions for triggering the events according to a specification, the latest UE measurement at time t is denoted as γ(*t*) and the threshold for event e is denoted as τ(*e*).

**6.** The method of claim 5, wherein the event e is 2d:

$$F(\text{"}2d\text{"},\tau(\text{"}2d\text{"}),\gamma(t)) = \begin{cases} 1, & if\ \gamma(t) < \tau(\text{"}2d\text{"}) \\ 0, & if\ \gamma(t) > \tau(\text{"}2d\text{"}) \end{cases}$$

wherein the UE is instructed to measure a GSM RSSI (RXLEV) for the closest GSM cell.

**7.** The method of claim 5, further comprising the step of sending, if event e is established, by the UE, a message signaling the event e to the network.

**8.** The method of claim 7, further comprising the step of responding, by the network, with further instructions to the UE to initiate additional measurements or to perform an HO.

**9.** The method of claim 5, wherein the threshold values $\tau(e)$ are based on the RAKE receiver performance.

**10.** The method of claim 9, further comprising the step of accounting, by the UE, for the improved receiver performance by introducing a correction term in the decision process identifying whether any events in E are triggered:

$$F(e,\tau(e)-D,\gamma(t)) = 1$$

and further comprising the step of determining D
by defining the current receiver and channel category $c(t)$ and performing a table lookup to find the corresponding average SIR gain:

$$D = \Delta SIR(c(t)),$$

or by computing two instantaneous SIR values: the current effective receiver SIR, $SIR(t)$ and an additional RAKE receiver SIR $SIR_{RAKE}(t)$ once the channel estimates and combining weights are available, and determining the correction term as:

$$D = SIR(t) - SIR_{RAKE}(t)$$

**11.** A method for optimizing inter-network handovers, HO, by user equipment comprising the steps of:

sending, by the user equipment, UE, UE measurement results $\gamma(t)$ to a network;
evaluating, by the network whether the condition(s) for any of events of interest, $e \in E$, for triggering handover measurements, are fulfilled:

$$F(e,\tau(e),\gamma(t)) = 1$$

where F() is a set of instructions for triggering the events according to the specifications, the latest UE measurement at time t is denoted as $\gamma(t)$ and the threshold for event e is denoted as $\tau(e)$,
further comprising the step of the UE, before sending, modifying the measurement results $\gamma(t)$ according to actual receiver performance by applying an offset that captures the effective improvement of an advanced receiver compared to a standard receiver used to set the threshold.

**12.** The method of claim 11, further comprising the step of the UE modifying a received signal code power, RSCP, value appropriately before reporting it.

**13.** The method of claim 12, further comprising reporting, by the UE
$\gamma_{eff}(t) = \gamma(t) + D$ , wherein D is chosen from $D = \Delta SIR(c(t))$ or $D = SIR(t) - SIR_{RAKE}(t)$.

**14.** A mobile communications terminal for optimizing inter-network handovers, comprising
a baseband processor (206) adapted to produce measurement results for use in inter-network handovers,
a control unit adapted to adjust threshold values used by a network for initiating handover measurements based on actual receiver performance, by applying an offset that captures the effective improvement of an advanced receiver compared to a standard receiver used to set the threshold values, and
a decision processor (301) adapted to compare the measurement results with the adjusted threshold values.

**15.** A mobile communications terminal for optimizing inter-network handovers comprising
a baseband processor (206) adapted to produce measurement results for use in inter-network handovers,
a control unit adapted to modify the measurement results based to actual terminal receiver performance, by applying an offset that captures the effective improvement of an advanced receiver compared to a standard receiver used to set thresholds used by a network for initiating handover measurements,
a front en transmitter (203) adapted to send measurement results modified by the decision processor (201) to a network.

**Patentansprüche**

**1.** Verfahren zur Optimierung von netzübergreifenden Handovers HO durch eine Teilnehmereinrichtung UE umfassend die folgenden Schritte:

Anpassen von Schwellenwerten τ(e), die durch ein Netz zum Einleiten von HO-Messungen auf der Basis der tatsächlichen UE-Leistung verwendet werden, durch Anwenden eines Versatzes, der die effektive Verbesserung eines erweiterten Empfängers im Vergleich zu einem Standardempfänger erfasst, der zum Einstellen der Schwellenwerte verwendet wird.

**2.** Verfahren nach Anspruch 1, wobei der Anpassungsschritt ein Anwenden eines Versatzes in dB umfasst, der die effektive Verbesserung des Signal-Interferenz-Verhältnisses SIR eines erweiterten Empfängers im Vergleich zu einem Standardempfänger erfasst, der zum Einstellen der Schwellen verwendet wird.

**3.** Verfahren nach Anspruch 1 oder 2, wobei der Versatz auf der Basis wenigstens eines Parameters berechnet wird, der ausgewählt ist aus der Gruppe bestehend aus:

dem Typ von Empfänger; der Anzahl von Empfängerantennen; dem Mehrwegkanalprofil; der Anzahl von aktiven Funkverbindungen und den Dienste-/Verbindungsmodi, die gegenwärtig in der UE aktiv sind.

**4.** Verfahren nach Schritt 1, wobei der Schritt des Anpassens von Schwellenwerten einen gemeinsamen Pilotkanal CPICH, eine Empfangssignalcodeleistung RSCP oder Ec/Io-Werte als ein HO-Kriterium verwendet.

**5.** Verfahren nach Anspruch 1, ferner umfassend den Schritt des Überprüfens durch die UE, ob die Bedingung(en) für irgendwelche der Ereignisse von Interesse e ∈ E erfüllt werden:

$$F\big(e, \tau(e), \gamma(t)\big) = 1$$

wobei F() ein Satz von Anweisungen zum Auslösen der Ereignisse gemäß einer Spezifikation ist, die letzte UE-Messung zum Zeitpunkt t als γ(t) bezeichnet ist, und die Schwelle für das Ereignis e als τ(e) bezeichnet ist.

**6.** Verfahren nach Anspruch 5, wobei das Ereignis e 2d ist:

$$F\big("2d",\tau("2d"),\gamma(t)\big)=\begin{cases}1, wenn\,\gamma(t)<\tau("2d")\\0, wenn\,\gamma(t)>\tau("2d")\end{cases},$$

wobei die UE angewiesen wird, eine GSM RSSI (RXLEV) für die nächst gelegene GSM-Zelle zu messen.

7. Verfahren nach Anspruch 5, ferner umfassend den Schritt des Sendens durch die UE, wenn das Ereignis e festgestellt wird, einer Nachricht, die das Ereignis e dem Netz signalisiert.

8. Verfahren nach Anspruch 7, ferner umfassend den Schritt des Antwortens durch das Netz mit weiteren Anweisungen an die UE zum Einleiten von zusätzlichen Messungen oder Durchführen eines HO.

9. Verfahren nach Anspruch 5, wobei die Schwellenwerte $\tau(e)$ auf der RAKE-Empfängerleistung basieren.

10. Verfahren nach Anspruch 9, ferner umfassend den Schritt des Berücksichtigens durch die UE der verbesserten Empfängerleistung durch Einführen eines Korrekturterms in den Entscheidungsprozess, der identifiziert, ob irgendwelche Ereignisse in E ausgelöst werden:

$$F\big(e,\tau(e)-D,\gamma(t)\big)=1$$

und ferner umfassend den Schritt des Bestimmens von D durch Definieren der aktuellen Empfänger- und Kanalkategorie $c(t)$ und Durchführen eines Tabellennachschlagens zum Ermitteln der entsprechenden mittleren SIR-Verstärkung:

$$D=\Delta SIR\big(c(t)\big)$$

oder durch Berechnen zweier momentaner SIR-Werte: des aktuellen effektiven Empfänger-SIRs SIR(t) und eines zusätzlichen RAKE-Empfänger-SIRs $SIR_{RAKE}(t)$, sobald die Kanalschätzungen und Verknüpfungsgewichte verfügbar sind, und
Bestimmen des Korrekturterms als:

$$D=SIR(t)-SIR_{RAKE}(t)$$

11. Verfahren zur Optimierung von netzübergreifenden Handovers HO durch eine Teilnehmereinrichtung, umfassend die folgenden Schritte:

Senden durch die Teilnehmereinrichtung UE von UE-Messergebnissen $\gamma(t)$ an ein Netz;
Bewerten durch das Netz, ob die Bedingung(en) für irgendwelche Ereignisse von Interesse $e \in E$ zum Auslösen von Handover-Messungen erfüllt werden:

$$F\big(e,\tau(e),\gamma(t)\big)=1$$

wobei F() ein Satz von Anweisungen zum Auslösen der Ereignisse gemäß den Spezifikationen ist, die letzte UE-Messung zum Zeitpunkt t als $\gamma(t)$ bezeichnet ist, und die Schwelle für das Ereignis e als $\tau(e)$ bezeichnet ist, ferner umfassend den Schritt der UE vor dem Senden des Modifizierens der Messergebnisse $\gamma(t)$ gemäß der tatsächlichen Empfängerleistung durch Anwenden eines Versatzes, der die effektive Verbesserung eines erweiterten Empfängers im Vergleich zu einem Standardempfänger erfasst, der zum Einstellen der Schwelle verwendet wird.

**12.** Verfahren nach Anspruch 11, ferner umfassend den Schritt der UE des entsprechenden Modifizierens des Wertes einer Empfangssignalcodeleistung RSCP vor seiner Meldung.

**13.** Verfahren nach Anspruch 12, ferner umfassend ein Melden durch die UE von $\gamma_{eff}(t) = \gamma(t) + D$, wobei $D$ aus $D=\Delta SIR(c(t))$ oder $D=SIR(t)-SIRRAKE(t)$ gewählt ist.

**14.** Mobiles Kommunikationsendgerät zum Optimieren von netzübergreifenden Handovers, umfassend:

einen Basisbandprozessor (206), der so ausgelegt ist, dass er Messergebnisse zur Verwendung bei netzübergreifenden Handovers erzeugt,
eine Steuereinheit, die so ausgelegt ist, dass sie Schwellenwerte, die durch ein Netz zum Einleiten von Handover-Messungen auf der Basis der tatsächlichen Empfängerleistung verwendet werden, durch Anwenden eines Versatzes anpasst, der die effektive Verbesserung eines erweiterten Empfängers im Vergleich zu einem Standardempfänger erfasst, der zum Einstellen der Schwellenwerte verwendet wird, und
einen Entscheidungsprozessor (201), der so ausgelegt ist, dass er die Messergebnisse mit den angepassten Schwellenwerten vergleicht.

**15.** Mobiles Kommunikationsendgerät zum Optimieren von netzübergreifenden Handovers, umfassend:

einen Basisbandprozessor (206), der so ausgelegt ist, dass er Messergebnisse zur Verwendung bei netzübergreifenden Handovers erzeugt,
eine Steuereinheit, die so ausgelegt ist, dass sie die Messergebnisse auf der Basis der tatsächlichen Endgeräteempfängerleistung durch Anwenden eines Versatzes modifiziert, der die effektive Verbesserung eines erweiterten Empfängers im Vergleich zu einem Standardempfänger erfasst, der zum Einstellen von Schwellen verwendet wird, die durch ein Netz zum Einleiten von Handover-Messungen verwendet werden,
einen Front-End-Sender (203), der so ausgelegt ist, dass er Messergebnisse, die durch den Entscheidungsprozessor (201) modifiziert wurden, an ein Netz sendet.

**Revendications**

**1.** Procédé d'optimisation de transferts inter-réseau, HO, par un équipement d'utilisateur, UE, comprenant l'étape consistant à :

ajuster des valeurs de seuil r(e) utilisées par un réseau pour amorcer des mesures HO basées sur la performance effective de l'UE en appliquant un décalage qui capture l'amélioration effective d'un récepteur avancé comparé à un récepteur standard utilisé pour régler les valeurs de seuil.

**2.** Procédé selon la revendication 1, dans lequel l'étape d'ajustement comprend d'appliquer un décalage en dB qui capture l'amélioration effective du rapport signal sur interférence, SIR, d'un récepteur avancé comparé à un récepteur standard utilisé pour régler les seuils.

**3.** Procédé selon la revendication 1 ou 2, dans lequel le décalage est calculé sur la base d'au moins un paramètre sélectionné dans le groupe constitué de : le type de récepteur ; le nombre d'antennes réceptrices ; le profil de canal à trajets multiples ; le nombre de liaisons radio actives ; et les modes de services/connexion actuellement actifs dans l'UE.

**4.** Procédé selon la revendication 1, dans lequel l'étape d'ajustement des valeurs de seuil utilise un canal pilote commun, CPICH, une puissance de code de signal reçu, RSCP, ou des valeurs Ec/Io, comme un critère HO.

**5.** Procédé selon la revendication 1, comprenant en outre l'étape de la vérification, par l'UE, de ce que la(les) condition (s) pour n'importe lequel des évènements présentant un intérêt, e ∈ E, sont remplies :

$$F\big(e,\tau(e),\gamma(t)\big)=1$$

où F() est un jeu d'instructions pour déclencher les évènements selon une spécification, la dernière mesure UE au temps t est dénotée comme γ(t) et le seuil pour l'évènement e est dénoté comme r(e).

6. Procédé selon la revendication 5, dans lequel l'évènement e est 2d :

$$F\left("2d",\tau("2d"),\gamma(t)\right)=\begin{cases}1, wenn\,\gamma(t)<\tau("2d")\\0, wenn\,\gamma(t)>\tau("2d")\end{cases}$$

dans lequel l'UE reçoit l'instruction de mesurer un RSSI GSM (RXLEV) pour la cellule GSM la plus proche.

7. Procédé selon la revendication 5, comprenant en outre l'étape d'envoi, si l'évènement e est établi, par l'UE d'un message signalant l'évènement e au réseau.

8. Procédé selon la revendication 7, comprenant en outre l'étape de réponse, par le réseau, avec des instructions supplémentaires à l'UE afin d'amorcer des mesures additionnelles ou d'effectuer un HO.

9. Procédé selon la revendication 5, dans lequel les valeurs seuils r(e) sont basées sur la performance du récepteur RAKE.

10. Procédé selon la revendication 9, comprenant en outre l'étape de comptabilisation, par l'UE, pour la performance de récepteur améliorée en introduisant un terme de correction dans le processus de décision identifiant si n'importe quels évènements dans E sont déclenchés :

$$F\left(e,\tau(e)-D,\gamma(t)\right)=1$$

et comprenant en outre l'étape de détermination D en définissant le récepteur et la catégorie de canal c(t) actuels et en effectuant une recherche dans une table afin de trouver le gain SIR moyen correspondant :

$$D=\Delta SIR\left(c(t)\right)$$

ou en calculant informatiquement deux valeurs SIR instantanées : le SIR de récepteur effectif actuel, SIR(t), et un SIR de récepteur RAKE additionnel $SIR_{RAKE}(t)$ une fois que les estimations de canal et les pondérations de combinaison sont disponibles, et
en déterminant le terme de correction comme :

$$D=SIR(t)-SIR_{RAKE}(t)$$

11. Procédé d'optimisation de transferts inter-réseau, HO, par un équipement d'utilisateur comprenant les étapes consistant à :

envoyer, par l'équipement d'utilisateur UE, des résultats de mesure UE γ(t) à un réseau ;
évaluer, par le réseau, si la(les) condition(s) pour n'importe lequel des évènements présentant un intérêt e ∈ E, pour déclencher des mesures de transfert, sont remplies :

$$F\left(e,\tau(e),\gamma(t)\right)=1$$

où F() est un jeu d'instructions pour déclencher les évènements selon les spécifications, la dernière mesure UE au temps t est dénotée comme γ(t) et le seuil pour l'évènement e est dénoté comme r(e), comprenant en outre l'étape de modification par l'UE, avant l'envoi des résultats de mesure γ(t) selon la performance de récepteur effective en appliquant un décalage qui capture l'amélioration effective d'un récepteur avancé comparé à un récepteur standard utilisé pour régler le seuil.

12. Procédé selon la revendication 18, comprenant en outre l'étape de modification par l'UE d'une valeur de puissance de code de signal reçu, RSCP, de manière appropriée avant de la rapporter.

13. Procédé selon la revendication 19, comprenant en outre le rapport, par l'UE $\gamma_{eff}(t) = \gamma(t) + D$, dans lequel D est choisi d'après $D=\Delta SIR(c(t))$ ou $D=SIR(t)-SIRRAKE(t)$.

14. Terminal de communication mobile pour optimiser des transferts inter-réseau, comprenant :

un processeur de bande de base (206) adapté afin de produire des résultats de mesure à utiliser dans des transferts inter-réseau,
une unité de commande adaptée afin d'ajuster des valeurs de seuil utilisées par un réseau pour amorcer des mesures de transferts sur la base de la performance de récepteur effective, en appliquant un décalage qui capture l'amélioration effective d'un récepteur avancé comparé à un récepteur standard utilisé pour régler les valeurs de seuil, et
un processeur de décision (201) adapté afin de comparer les résultats de mesure avec les valeurs de seuil ajustées.

15. Terminal de communication mobile pour optimiser des transferts inter-réseau comprenant
un processeur de bande de base (206) adapté afin de produire des résultats de mesure à utiliser dans des transferts inter-réseau,
une unité de commande adaptée afin de modifier les résultats de mesure sur la base de la performance de récepteur de terminal effective, en appliquant un décalage qui capture l'amélioration effective d'un récepteur avancé comparé à un récepteur standard utilisé pour régler des seuils utilisés par un réseau pour amorcer des mesures de transport, un émetteur frontal (203) adapté afin d'envoyer des résultats de mesure modifiés par le processeur de décision (201) à un réseau.

100

FIG. 1

FIG. 2

EP 2 067 370 B1

300

FIG. 3

400

START — 401

Measure γ *(t)* — 402

Determine D — 403

Report $\gamma_{eff}(t) = \gamma(t) + D$
to network — 404

END — 405

FIG. 4

**EP 2 067 370 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11289001 B

- US 5557657 A, BARNETT CHARLES